# EUROPEAN PATENT APPLICATION

(11) **EP 1 124 116 A1**
(43) Date of publication of application: **16.08.2001**
(21) Application number: 01200481.8
(22) Date of filing: 09.02.2001
(51) Int. Cl.: G01F 15/14, G01F 1/66

(54) **Gas meter**

(30) Priority: 11.02.2000 GB 0030650; 15.06.2000 GB 0145276
(71) Applicant: SIEMENS METERING LIMITED, Oldham, Lancashire OL9 7JS (GB)
(72) Inventor: Dean, Michael, Chadderton, Oldham OL9 8AD (GB)
(74) Representative: Allen, Derek

(57) **Abstract**

There is provided a gas meter (100) comprising a filter (102), a main body portion (140), a covering portion (130) and a valve (112). Gas entering the filter (102) passes through an inlet assembly (104) into a first chamber (106). The gas then flows from the first chamber (106) to a measurement cell (108) in which flow parameters are measured. Gas proceeds into a second chamber (110) wherein the valve (112) is fixed. When the valve (112) is open the gas can escape into a third chamber (114) and thence to an outlet assembly (116). When the valve (112) is closed the gas is contained in the second chamber (110), the measurement cell (108) and the first chamber (106). Conventional gas meters have separate housing, for gas containment, and interior components, to form suitable measurement cells.

## Description

The present invention relates to a gas meter. In particular, the gas meter has a housing which combines gas containment elements with metrology elements.

Gas metering is well known in the delivery of fuel gases in a domestic context, however similar metering techniques are also applied to a whole range of substantially gaseous materials in industrial and commercial operations.

Conventional gas meters have an outer casing within which are housed the metering components, for example a measurement module having a measurement cell and measurement apparatus. When metering fuel gas, suitable materials for the casing and the metering components include brass, plastics and ceramics.

Gas parameters, including velocity, pressure, time of flight, calorific value density, speed of sound and temperature, can be measured and arrangements for measuring the parameters can be constructed as is well known in the art. By way of illustration only, a gas meter that measures gas velocity will be discussed. By measuring the average velocity of a gas flow in a known measurement chamber, parameters including the flow rate and the cumulative volume of gas passing the measuring chamber can be derived.

Velocity measurement may be achieved by transmitting measurement signals as sound waves, for example ultrasonic waves, through a flowing gas and by measuring the time of flight of the measurement signals. A recent development of velocity metering device includes two ultrasonic transducers and a timer. The transducers take turns to transmit and receive a measurement signal. Sound waves are transmitted both upstream and downstream through the flowing gas. The timer gives the upstream and downstream times of flight of the measurement signals. The upstream and downstream times of flight are then used to derive the average velocity of the gas.

Crucially the ultrasonic metering device described above has no moving parts.

When considered together, the gas containment function of the outer casing of a conventional gas meter and the gas metering assembly housed therein involve the painstaking assembly of a large number of components.

It is therefore an object of the invention to obviate or at least mitigate the aforementioned problems.

In accordance with the present invention, there is provided a metering device for measuring the characteristics of a gas flowing therethrough, the metering device including: an outer shell, having a gas inlet assembly, a gas outlet assembly, an interior that forms a sealed passageway between the gas inlet assembly and the gas outlet assembly and an exterior; and measurement apparatus, provided within the outer shell so that the measurement apparatus is capable of performing measurements within the sealed passageway, the sealed passageway being sealed to allow the gas to flow from the gas inlet to the gas outlet without leaking to the exterior.

The sealed passageway preferably includes a measurement cell which is formed adjacent to the measurement apparatus to enable the performance of measurements upon the gas.

The measurement apparatus may be disposed in a recess formed in the interior of the outer shell.

Advantageously, the measurement apparatus includes means for measuring the velocity of the gas in the sealed passageway.

The means for measuring the velocity of the gas may include at least two transducers and a timer; the timer being used to establish a time of flight of a signal transmitted from one of the transducers to another and thereby measuring the velocity of the gas.

The transducers are preferably ultrasonic transducers.

The gas outlet assembly may further include a pressure point to enable installation leak testing.

The gas inlet assembly further includes a filter means.

The metering device advantageously includes a valve disposed between the sealed passageway and the gas outlet assembly.

Preferably, the outer shell comprises a main body portion and a covering portion, the gas inlet assembly being formed in the main body portion. The gas outlet assembly may also be formed in the main body portion.

The measurement apparatus may be provided in the main body portion.

Alternatively, the measurement apparatus is provided in the covering portion.

For a better understanding of the present invention, reference will now be made, by way of example only, to the accompanying drawings in which:
Figure 1 shows a schematic diagram of a conventional gas meter;
Figure 2 shows a schematic diagram of a gas meter according to the present invention; and
Figure 3 shows the measurement portion of a gas meter according to the present invention.

In the following discussion of the drawings like reference signs refer to similar features.

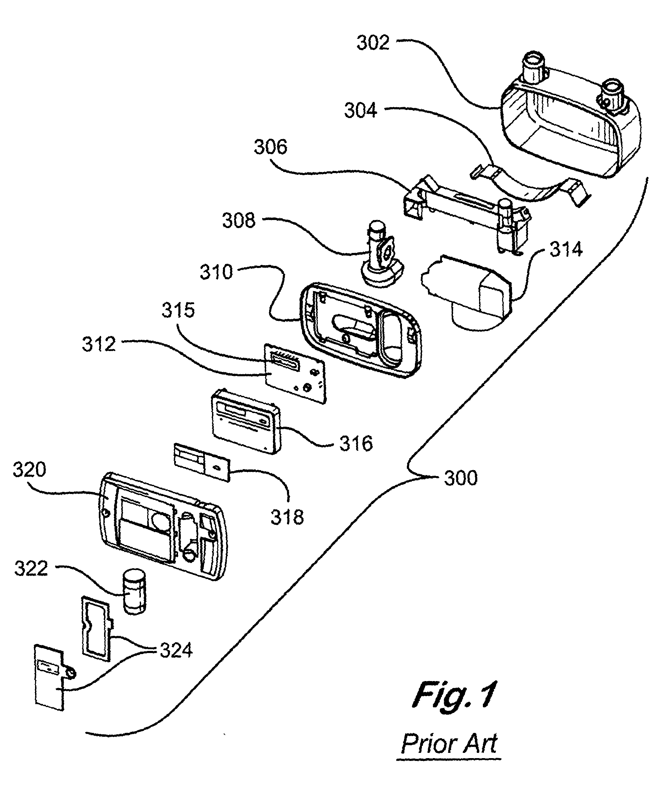

An exploded schematic diagram of a conventional gas meter 300 is presented in Figure 1. The gas meter 300 has: a case back 302 upon which an inlet boss and an outlet boss are formed; a variety of components including a flow measurement tube 306, an inlet tube and dust trap 308, and a filter 314, all held in place by a retaining clip 304; an inner case 310 which covers the components; and an outer case 320. The remaining components of the conventional gas meter 300 provide information to the gas meter user. Set between the inner case 310 and the outer case 320 are the printed circuit board (PCB) 312 carrying the electronics necessary for gathering measurements from the flow measurement component 306 and for driving a display 315. Other known meters are provided with optical or insulated electrical ports for transmitting metering information. The PCB 312 is protected by a shield case 316 and marked by a name plate 318.

The electronics of the gas meter 300 can be made independent of mains electricity by the provision of a battery assembly comprising a recess in the outer case 320 for a battery 322 and covering the battery with a battery door 324.

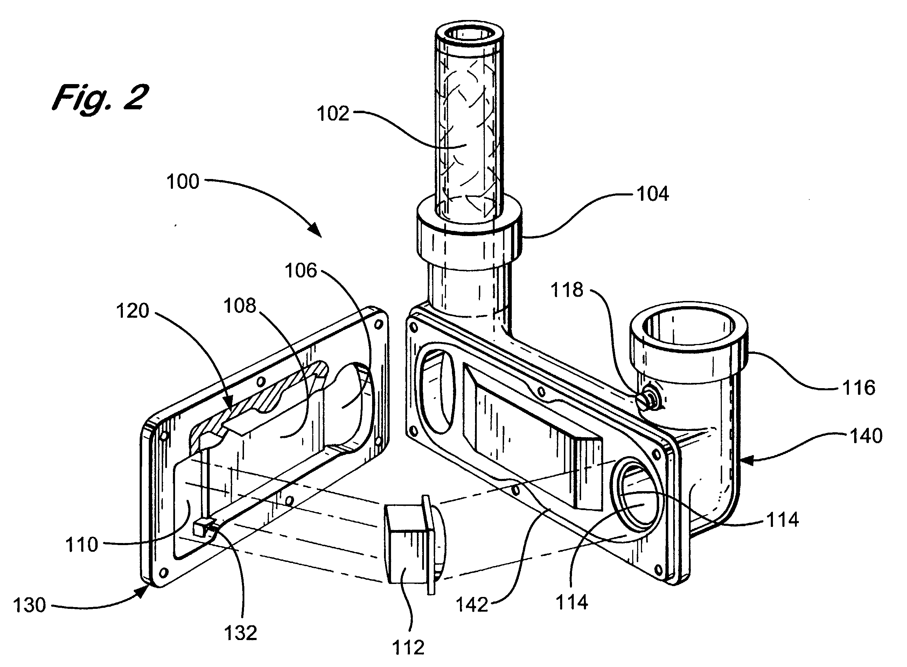

Figure 2 shows a gas meter 100 according to the present invention for use in a domestic context comprising a filter 102, a main body portion 140, a covering portion 130 and a valve 112. The main body portion 140 is arranged to co-operate with the covering portion 130 to form a sealed passageway between a gas inlet assembly 104 and a gas outlet assembly 116. A gas seal 142 is provided between the main body portion 140 and the covering portion 130 to ensure the sealed passageway remains leakfree.

Gas entering the filter 102 passes through the inlet assembly 104 into a first chamber 106. The gas then flows from the first chamber 106 to a measurement cell 108 in which the flow characteristics are measured by measurement apparatus 120. Gas proceeds into a second chamber 110 wherein the valve 112 is fixed by a valve fixing means 132. The valve 112 is sealed against the main body portion at a valve sealing face 144. When the valve 112 is open the gas can escape into a third chamber 114 and thence to the outlet assembly 116. When the valve 112 is closed the gas is contained in the second chamber 110, the measurement cell 108 and the first chamber 106.

The outlet assembly 116 is also provided with a pressure point 118. The pressure point 118 to enables installation leak testing.

The gas inlet assembly 104 and the gas outlet assembly 116 are both removeably connected to standard 1" pipe thread (1" = 25.4mm). Other dimensions of the gas meter 100 are constrained by manufacturing standards. A typical standard distance between the centres of a gas meter inlet and outlet is 6" (152.4mm); similarly a suitable form factor for a domestic gas meter is 190mm by 80mm.

The valve 112 is used as part of a pre-payment system. A prepayment module (not shown) is connected to the valve and closes the valve when insufficient payment has been deposited. In common embodiments, the prepayment system accepts payment in forms including coins, tokens, payment cards and a keyed-in multi-digit code sequence.

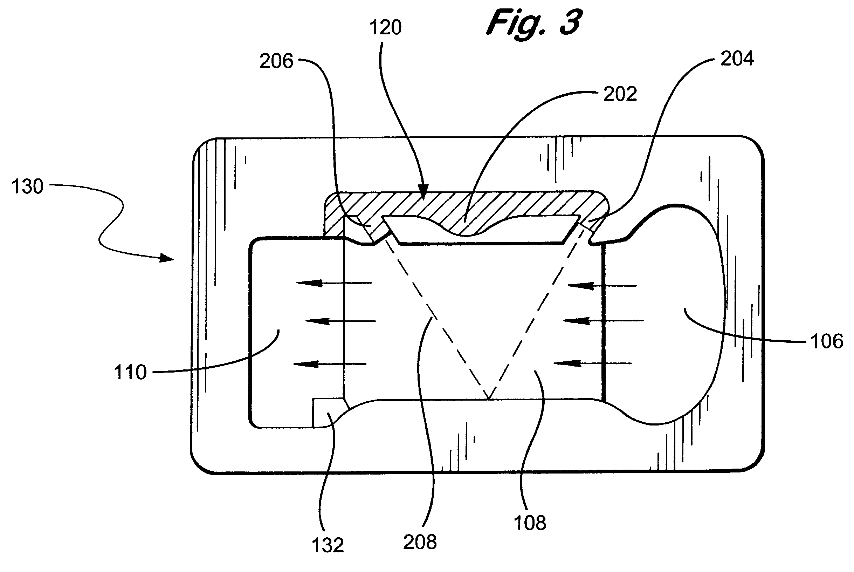

Figure 3 shows the covering portion 130, including the measurement apparatus 120, in more detail. The covering portion 130 is provided with a recess wherein the wire routing for the measurement apparatus 120 and the components of the measurement apparatus 120 are wholly encapsulated by the material of the covering portion 130. The illustrated measuring apparatus 120 measures velocity using the time of flight of ultrasonic pulses and comprises a timer 202, a first transducer 204 and a second transducer 206. An ultrasonic pulse is emitted by the first transducer 204 and follows a path 208 downstream in the measurement cell 108, reflects at the wall of the measurement cell 108, and is received at the second transducer 206 thus giving a downstream time of flight. Likewise an ultrasonic pulse emitted by the second transducer 206 is received at the first transducer 204, thus giving the upstream time of flight. A number of measurements of values for the time of flight are taken and an average velocity is derived from the result.

The meter combines both gas containment and metrology elements using the minimum number of components, thereby simplifying manufacture and reducing overall costs.

The manufacture of the hybrid gas meter is achieved by a selection of suitable metal forming and machining processes, for example hot stamping, inline machining, die casting and investment casting.

Comparison between the gas meter 100 of the present invention and the conventional gas meter 300 illustrates the distinct features of the present invention. The gas meter 300 in Figure 1 has a case back 302, an inner case 310 and an outer case 320, rather than a simple outer shell. The conventional gas meter 300 has separate components including a flow measurement tube 306, an inlet tube and dust trap 308, and a filter 314, all held in place by a retaining clip 304, while a device according to the invention uses the interior surface of the outer shell to form a measurement cell 108.

A device according to the present invention may include components analogous to components used in conventional gas meters: so, for example, a gas meter according to the invention may include a display, an optical port and a battery assembly. Although the embodiment above is described in terms of domestic applications, it will be understood that the design and manufacturing techniques selected are suitable for producing domestic, industrial and commercial gas metering products. In industrial applications, the form factor of the device may be larger or smaller than in domestic settings.

A typical industrial gas meter will have measurement apparatus capable of measuring more than one gas parameter independently, for example the temperature, pressure and the velocity of the gas flowing in the sealed passageway. Similarly, it will be clear to the skilled man that the metering device can be scaled to accept a wide range of expected flow rates and to removeably connect to inlet and outlet pipes of various cross-sections.

It will be understood that forming a sealed passageway from a main body portion and a covering portion is by no means the only embodiment of the present invention. The present invention encompasses embodiments having a sealed passageway in which measurements can be carried out, provided the housing and the interior are formed from the same component. A further embodiment of the invention has a one-piece outer shell having a suitable sealed passageway and a recess for measurement apparatus formed therein. Alternatively a plurality of measurement cells may be formed within the passageway to allow the measurement of a variety of gas parameters. The measuring apparatus may be provided on either the main body portion or the covering portion or between said portions.

## Claims

1. A metering device for measuring the characteristics of a gas flowing therethrough, the metering device including:
an outer shell, having a gas inlet assembly, a gas outlet assembly, an interior that forms a sealed passageway between the gas inlet assembly and the gas outlet assembly, and an exterior; and
measurement apparatus, provided within the outer shell so that the measurement apparatus is capable of performing measurements within the sealed passageway, the sealed passageway being sealed to allow the gas to flow from the gas inlet to the gas outlet without leaking to the exterior.

2. A metering device as claimed in Claim 1, wherein the sealed passageway includes a measurement cell which is formed adjacent to the measurement apparatus to enable the performance of measurements upon the gas.

3. A metering device as claimed in Claims 1 or 2, wherein the measurement apparatus is disposed in a recess formed in the interior of the outer shell.

4. A metering device as claimed in Claims 1, 2 or 3, wherein the measurement apparatus includes means for measuring the velocity of the gas in the sealed passageway.

5. A metering device as claimed in Claim 4, wherein the means for measuring the velocity of the gas includes at least two transducers and a timer; the timer being used to establish a time of flight of a signal transmitted from one of the transducers to another and thereby measuring the velocity of the gas.

6. A metering device as claimed in Claim 5, wherein the transducers are ultrasonic transducers.

7. A metering device as claimed in any one of the preceding claims, wherein the gas outlet assembly further includes a pressure point to enable installation leak testing.

8. A metering device as claimed in any one of the preceding claims, wherein the gas inlet assembly further includes a filter means.

9. A metering device as claimed in any one of the preceding claims, further including a valve disposed between the sealed passageway and the gas outlet assembly.

10. A metering device as claimed in any one of the preceding claims, wherein the outer shell comprises a main body portion and a covering portion, the gas inlet assembly being formed in the main body portion.

11. A metering device as claimed in Claim 10, wherein the gas outlet assembly is formed in the main body portion.

12. A metering device as claimed in Claims 10 or 11, wherein the measurement apparatus is provided in the main body portion.

13. A metering device as claimed in Claims 10 or 11, wherein the measurement apparatus is provided in the covering portion.

14. A metering device substantially as hereinbefore described with reference to the accompanying drawings.
